# EUROPEAN PATENT APPLICATION

(11) **EP 1 055 618 A1**
(43) Date of publication of application: **29.11.2000**
(21) Application number: 00110574.1
(22) Date of filing: 18.05.2000
(51) Int. Cl.: B65G 35/00, B05C 3/10

(54) **Apparatus for the treatment, coating, or the like of small articles, in particular screws**

(30) Priority: 26.05.1999 DE 29909170 U
(71) Applicant: ITW Automotive Products GmbH & Co. KG, 58642 Iserlohn (DE)
(72) Inventor: Jahnke, Klaus, 58675 Hemer (DE); Franziskus, Andreas, 58640 Iserlohn (DE)
(74) Representative: Patentanwälte Hauck, Graalfs, Wehnert, Döring, Siemons

(57) **Abstract**

An apparatus for the treatment, coating or the like of small articles, in particular screws or the like in baths, comprising a plurality of baskets (24) seriesly arranged, open on the top and made of liquid permeable or, respectively, perforated material, the baskets (24) being supported for tilting movement about a horizontal axis between a receiving or treating position and a transferring position, the baskets (24) in the treating position being substantially horizontally arranged and immersed at least partially in the bath while in the transferring position the baskets (24) cast the contents therein into a basket adjacent thereto in conveying direction, and further comprising driving means for the baskets.

## Description

The invention relates to an apparatus for the treatment, coating or the like of small articles, in particular screws, according to claim 1.

There is frequently an object to feed articles such as screws or similar metallic small articles to one or more baths in which cleaning, coating, another treatment and the like are performed. For this purpose, it is known to use a drum which is filled with a charge of the articles each. The drum is manufactured from a latticed material and enables an access for a liquid to the articles which are in the drum while it is rotating in the bath. It is further known to suspend baskets in baths, in which baskets there are articles which need to be treated or coated. Likewise, it is known to pass articles through electroplating baths by means of linear conveying devices in order to apply a coating to the articles.

It is the object of the invention to provide an apparatus for the treatment, coating or the like of small articles, in particular screws, which allows an automatic process at a low expenditure of equipment where the articles undergo a high-quality treatment or coating.

This object is achieved by the features of claim 1.

In the inventive apparatus, a plurality of baskets lined up in a series are provided which are open to the top and are made of liquid permeable material. The baskets are supported for being pivoted or tilted about a horizontal axis between a treating position in which the open side of the baskets points upwards and a transferring position in which the baskets are tilted in such a way that their contents may slide out. The baskets are arranged to one another so that when tilted to the transferring position the material slides from this basket into the next basket which is in the treating position. Thus, tilting the baskets alternately enables the material which was filled into the first basket of the series to be conveyed up to the last basket. The basket is immersed in a bath in the treating position so that a treatment or coating or a similar process may be made on the small articles.

Thus, the period for which the articles are subjected to a treatment may be preset by means of an appropriate drive which effects the actuation of the baskets by automatic time control.

It is quite imaginable to actuate each basket individually, which permits the passage of the articles through the series of baskets to take place at different conveying speeds. However, it is easier for the equipment to provide two groups of baskets which have a common driving means each, the baskets of one group alternating with the baskets of the other group of the series. In other words, the baskets of one group are once in a treating position and the baskets of the other group are in the transferring position, and vice versa. The constructional realization of such a drive is relatively easy. Thus, in an aspect of the invention, the baskets may be rotatably attached to a shaft, each shaft including a lever attached to one end thereof and the lever cooperating with a rod with the rod being movable to and fro by means of a linear drive.

Thus, the respective baskets are pivoted to the working position and the transferring position during a lifting motion.

Another option to actuate the baskets, for example, is to form toothed segments on the rod which interact with pinions or toothed segments which are firmly arranged on the respective shaft.

In another aspect of the invention, the baskets are triangular in cross-section. This makes it possible to automatically empty the baskets, in a particular easy way, into the basket arranged ahead of them.

The inventive apparatus has a number of advantages. The treating or coating process can be carried out in a fully automatic way. The result of treatment is uniform because it is only a small quantity which undergoes treatment or coating in each basket. The inventive apparatus requires a very small floorspace. However, the quantity treated per unit time is optimal in spite of this.

The invention will now be explained in detail with reference to an embodiment shown in the drawings.
- Fig. 1: shows a side view of the apparatus according to the invention in a very schematical way.
- Fig. 2: shows a plan view of the apparatus of Fig. 1.
- Fig. 3: schematically shows a side view of the apparatus of Fig. 1 or Fig. 2 with an appropriate tilting motion drive shown in outlines.

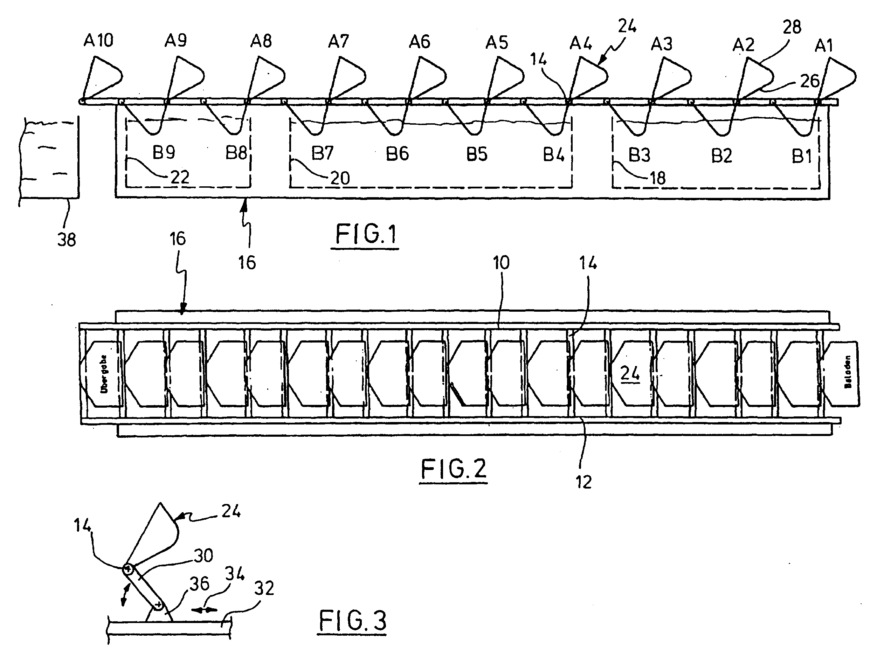

Referring to Fig. 2, two parallel rails 10, 12 can be seen between and by which a series of spaced-apart shafts 14 is pivotally supported. Rails 10 and 12 and shafts 14 are arranged on a horizontal plane. They are arranged at the upper surface of a housing 16 in which individual containers 18, 20, 22 are arranged, in which there is a treating liquid. For example, an activating liquid is disposed in container 18, a coating liquid, e.g. for phosphatization, is disposed in container 20, and a rinsing liquid is disposed, for example, in container 22.

Each shaft 14 has attached to it a basket 24. As can be seen from Figs. 1 and 2 a plurality of baskets 24 are provided, which are lined up in a series. The baskets 24 open to the top are trapezoidal as viewed from top. They are triangular in cross-section with the leg 26 connected to shaft 14 having a smaller slope than the other leg 28.

As baskets 24 are tiltably supported they take two different positions. One position is tilted and is called the transferring position. When in the other position, baskets 24 are immersed in the associated bath disposed in containers 18 to 22. The tilted containers 24 are indicated by A1 to A 10 in Fig. 1. The baskets placed in containers 18 to 22 are indicated by B1 to B9. The baskets A1 to A10 are jointly displaced as are the baskets B1 and B9. To this effect, a displacing mechanism as outlined in Fig. 3 may be used. What can be seen from Fig. 3 is that a lever arm 30 is firmly attached to a shaft 14. An actuating rod 32, which can be moved in the direction of the double arrow 34, has spaced on it brackets 36 to each of which a level 30 is hinged. Thus, a reciprocating motion of rod 32 causes baskets 24 to be pivoted between the positions shown in Fig. 1.

Referring to Figs. 1 and 2, baskets 24 are charged at the right-hand end and are discharged at the left-hand end with a container with a liquid being shown at 38 into which the treated or coated articles from the last basket A10 are filled.

The operation of the apparatus shown is as follows.

When in their initial position, all baskets A1 to A10 or B1 to B1 are in their treating position, i.e. the position in which the baskets B1 to B9 are already in Fig. 1. The right-hand basket A1 is charged with articles, e.g. screws, which arrive from a washer (not shown). During the charging operation or shortly afterwards, baskets B1 to B1 are lifted into the transferring position and empty their contents into the baskets A2 to A10 which are in the treating position. Subsequently, baskets B1 to B9 are pivoted back to the initial or treating position. After this, baskets A1 to A10 are lifted into the transferring position and transfer their contents each to the next following basket B1 to B9. At this point, basket A10 transfers the articles to container 38 for the next downstream operation.

The time cycle for the operations described is determined by the retention period desired for the articles in containers 18 to 22.

As can be seen from Fig. 1, baskets 24 are shaped and mutually associated so as to ensure in the transferring position that the articles received may smoothly slide into the succeeding basket. The transferring operation is made easier if the baskets, while being displaced to the transferring position, strike against a stop or, so to say, undergo an abrupt stopping action such that the articles received, because of inertia, migrate more easily into the next basket via the leg 26 which serves as a chute.

## Claims

1. An apparatus for the treatment, coating or the like of small articles, in particular screws or the like in baths, comprising a plurality of baskets (24) seriesly arranged, open on the top and made of liquid permeable or, respectively, perforated material, the baskets being supported for tilting movement about a horizontal axis between a receiving or treating position and a transferring position, the baskets in the treating position being substantially horizontally arranged and immersed at least partially in the bath while in the transferring position the baskets cast the contents therein into a basket adjacent thereto in conveying direction, and further comprising driving means (32) for the baskets (24).

2. The apparatus of claim 1, wherein two groups (A1 to A10 or B1 to B9) of baskets (24) are provided each having a common driving means, the baskets (24) of one group alternating with baskets (24) of the other group.

3. The apparatus of claim 1 or 2, wherein the tilting axes of the baskets (24) are located in a horizontal plane.

4. The apparatus of claim 1, wherein the baskets (24) are attached to a shaft (14), each shaft (14) including a lever (30) attached to one end thereof, and a rod (32) being linked to the lever, with the rod being linearly movable though a liner drive means.

5. The apparatus of claim 1, wherein the baskets (24) are triangular in cross section if looking in conveying direction, with a peak of the triangle facing downwardly.

6. The apparatus of claim 5, wherein the leg (26) of the basket (24) attached to the tilting axis having a smaller slope than the other leg (28) in view of the basket (24) in the treating position.
